# EUROPÄISCHE PATENTSCHRIFT

(11) **EP 4 352 924 B1**
(45) Veröffentlichungstag und Bekanntmachung des Hinweises auf die Patenterteilung: **20.05.2026**
(21) Anmeldenummer: 22736145.8
(22) Anmeldetag: 09.06.2022
(51) Int. Cl.: H04L 12/42, H04L 12/40, H04L 41/12

(54) **VERFAHREN ZUM ERMITTELN EINER KETTENPOSITION EINES NETZWERKTEILNEHMERS**
METHOD FOR DETERMINING A CHAIN POSITION OF A NETWORK SUBSCRIBER
PROCÉDÉ POUR DÉTERMINER UNE POSITION DE CHAÎNE D'UN ABONNÉ DE RÉSEAU

(30) Priorität: 11.06.2021 DE 102021115176
(43) Veröffentlichungstag der Anmeldung: 17.04.2024
(73) Patentinhaber: GEA Farm Technologies GmbH, 59199 Bönen (DE)
(72) Erfinder: SCHOLTYSSEK, Marco, 58730 Fröndenberg (DE)
(74) Vertreter: Kleine, Hubertus
(86) Internationale Anmeldenummer: PCT/EP2022/065712
(87) Internationale Veröffentlichungsnummer: WO 2022/258761

(56) Entgegenhaltungen:
- EP-A1- 3 819 732
- US-A1- 2020 162 285

## Beschreibung

Die Erfindung betrifft ein Verfahren zum Ermitteln einer Kettenposition eines Netzwerkteilnehmers in einem Ethernet-Netzwerk, bei der die Netzwerkteilnehmer in einer Daisy Chain-Kette miteinander verbunden sind und die Daisy Chain-Kette an ihren beiden Enden mit jeweils einem Port eines Ethernet-Gateways gekoppelt ist. Die Erfindung betrifft weiterhin eine Anordnung von landwirtschaftlichen Geräten mit Netzwerkteilnehmern, die zur Durchführung des Verfahrens geeignet ist.

Klassisch wird in Ethernet-Netzwerken häufig eine Sterntopologie eingesetzt, bei der eine Mehrzahl von Netzwerkteilnehmern sternförmig mit jeweils einem Port eines Gateways verbunden ist. In dieser Topologie kann auf einfache Weise eine Zuordnung von Identifikatoren der Netzwerkteilnehmer, also beispielsweise die ihnen zugewiesene IP (Internet Protocol)-Adresse oder die ihnen inhärent zugeordnete MAC (Media Access Control)-Adresse und dem Port (Anschluss), mit dem der Netzwerkteilnehmer gekoppelt ist, abgefragt werden. Eine solche Abfrage ist beispielsweise dann relevant, wenn sich eine Vielzahl von gleichartigen Netzwerkteilnehmern in einer Anlage befindet.

Landwirtschaftliche Anlagen, beispielsweise Melkstände, weisen häufig eine solche Vielzahl von zunächst einmal gleichartigen Netzwerkteilnehmern auf. Ein Beispiel eines Melkstands ist ein Melkkarussell, auf dem sich eine große Zahl gleichartige Melkplätze befinden kann, die entlang des Umfangs des Melkkarussells angeordnet sind und deren Steuereinrichtung zur Überwachung und/oder Steuerung mit einem Ethernet-Anschluss versehen sind. Den Plätzen wird umlaufend eine Platznummer zugeteilt. Wenn aufgrund eines Verdrahtungsplanes die Zuordnung zwischen Platznummer und Port des Gateways in einer Sterntopologie bekannt ist, kann auf einfache Weise zu jedem Platz eine Identifikationsnummer, also z.B. die IP-Adresse und/oder die MAC-Adresse ermittelt werden.

Neben der Sterntopologie wird inzwischen auch in Ethernet-Netzwerken eine Daisy Chain-Topologie verwendet. Dafür geeignete Netzwerkteilnehmer weisen zwei Ethernet-Ports auf, mit denen sie mit jeweils ihrem Nachbarn bzw. am Ende der Kette mit jeweils einem Port eines Gateways gekoppelt sind. Die so entstehende Ringstruktur bietet die Vorteile einer unter Umständen einfacheren Verkabelung zwischen den Netzwerkteilnehmern und auch eine gewisse Redundanz, da zumindest eine Unterbrechung einer Verbindung dadurch kompensiert werden kann, dass die Netzwerkteilnehmer von unterschiedlichen Seiten erreicht werden können.

Auch in landwirtschaftlichen Anlagen, beispielsweise dem zuvor beschriebenen Melkkarussell oder sonstigen Melkständen, d.h. Anordnungen von Melkplätzen, kann die Daisy Chain-Topologie eingesetzt werden, insbesondere um den Verdrahtungsaufwand zu verringern.

Auch bei der Daisy Chain-Topologie kann auf einfache Weise eine Liste von Identifikationsnummern der Netzwerkteilnehmer, also z.B. eine Liste von IP-Adressen und/oder MAC-Adressen, erfasst werden, jedoch ist keine Information mehr darüber verfügbar, an welcher Position innerhalb der Daisy Chain-Kette sich welcher Netzwerkteilnehmer befindet. Entsprechend kann auch eine Zuordnung zwischen Platznummern auf dem Melkkarussell und Identifikationsnummern nicht mehr auf einfache Weise erstellt werden.

Stattdessen muss bei der Installation eine Identifikationsnummern des Netzwerkteilnehmers lokal am Netzwerkteilnehmer abgelesen oder über einen unmittelbar verbundenen Servicerechner ermittelt werden und die Identifikationsnummer dann in einer Zuordnungstabelle der Platznummer zugeordnet werden. Dieser Vorgang könnte vereinfacht werden, wenn automatisiert erfasst werden kann, welcher Netzwerkteilnehmer welche Position innerhalb der Daisy Chain-Kette innehat. In dem Fall kann wiederum aus dem bekannten Verdrahtungsplan die entsprechende Tabelle mit der Zuordnung von Platznummern und Netzwerkteilnehmern erstellt werden.

Aus der Druckschrift US 2020/0 162 285 A1 ist ein Verfahren zur Bestimmung der Anordnung von Ethernet-Netzwerkteilnehmern bekannt, die in einem Daisy-Chain Ring miteinander verbunden sind. Dazu werden zunächst mit einer Broadcast-Abfrage alle Netzwerkteilnehmer erfasst und die Ausrichtung im Hinblick auf einen freigeschalteten Port eines Gateways aufgezeichnet. Nachfolgend werden an beliebigen Stellen Ports der Netzwerkteilnehmer abgeschaltet und wiederum mit einer Broadcast-Abfrage erfasst, an welcher Stelle eine Unterbrechung im Ring vorliegt. Insgesamt wird somit eine Broadcast-Abfrage zur Abfrage der Orientierung der Teilnehmer und anschließend für jeden vorhandenen Teilnehmer eine weitere Broadcast-Abfrage benötigt, um die Position der Teilnehmer im Ring zu erkennen. Insbesondere bei größeren Ringen ist das Verfahren zu einem großen Netzwerkverkehr, da viele Broadcast-Abfragen getätigt werden, die entsprechend viele Antworten zur Folge haben.

Die Druckschrift EP 3 819 732 A1 eine doppelt verkette Ringanordnung von Ethernet-Geräten, die jeweils 4 Ports aufweisen, um in der gezeigten Topologie gekoppelt werden zu können. Zur Topologieerfassung wird ein Paket von einem Gateway aus durch das Netzwerk geleitet, das von jedem Netzwerkteilnehmer um dessen spezifische Adresse ergänzt wird. Nach dem Durchlaufen des Netzwerks wird das Paket wieder vom Gateway empfangen und die hinzugefügten Einträge werden ausgewertet, um die Topologie abzuleiten. Das Verfahren lässt sich mit sehr geringem Datenaufwand durchführen, setzt allerdings voraus, dass Pakete von den einzelnen Teilnehmern ergänzt werden und zu einem nächsten Teilnehmer weitergeleitet werden können.

Es ist eine Aufgabe der vorliegenden Erfindung, ein Verfahren zum Ermitteln einer Kettenposition eines Netzwerkteilnehmers innerhalb einer Ethernet-Daisy Chain-Topologie zu ermitteln, die mit wenig zusätzlichem Netzwerkverkehr durchgeführt werden kann. Es ist eine weitere Aufgabe, eine landwirtschaftliche Anordnung mit einer Mehrzahl von Netzwerkteilnehmern zu schaffen, mit der dieses Verfahren ausgeführt werden kann.

Diese Aufgabe wird gelöst durch ein Verfahren bzw. eine landwirtschaftliche Anlage mit den Merkmalen des jeweiligen unabhängigen Anspruches. Vorteilhafte Ausgestaltung und Weiterbildungen sind Gegenstand der abhängigen Ansprüche.

Ein erfindungsgemäßes Verfahren der eingangs genannten Art zeichnet sich durch die folgenden Schritte aus: In einem ersten Schritt (a) wird einer der beiden Ports des Ethernet-Gateways deaktiviert und anschließend in einem Schritt (b) eine Statusmeldung eines der Netzwerkteilnehmers erfasst, die einen Port des betreffenden Netzwerkteilnehmers betrifft, der als Folge des Schritts (a) keine aktive Verbindung aufweist. Aus der Statusmeldung wird in einem Schritt (c) eine Identifikationsnummer des betreffenden Netzwerkteilnehmers extrahiert und diese einer ersten Kettenposition zugeordnet. In einem Schritt (d) wird dann der andere Port des betreffenden Netzwerkteilnehmers deaktiviert. Anschließend werden die Schritte (b) bis (d) wiederholt, bis alle Netzwerkteilnehmer mit ihrem Identifikator erfasst sind, wobei in den Wiederholungen des Schritts (c) nachfolgende, insbesondere aufsteigende oder abfallende, Kettenpositionen zugeordnet werden, und wobei in dem Schritt (b) die Statusmeldung einen Port des betreffenden Netzwerkteilnehmers betrifft, der als Folge des Schritts (d) keine aktive Verbindung aufweist.

Um bei der Ethernet-Daisy Chain-Topologie den Ausfall einer Netzwerkleitung kompensieren zu können, besitzen die Netzwerkteilnehmer die Fähigkeit, einen nicht mit einem aktiven Port eines weiteren Netzwerkteilnehmers verbundenen Port zu erkennen und dem Switch zu melden. In einem erfindungsgemäßen Verfahren werden die Netzwerkteilnehmer darüber hinaus dazu eingerichtet, auf eine Anfrage hin einen Port zu deaktivieren. Das erfindungsgemäße Verfahren nutzt dann diese Möglichkeiten, um über ein gezieltes Deaktivieren von Ports Informationen zu den Positionen der Netzwerkteilnehmer innerhalb der Daisy Chain-Kette abfragen zu können. Sukzessive wird die Kette von einem Ende ausgehend bis zum anderen Ende durch Deaktivieren von Ports und damit "unsichtbar machen" von Netzwerkteilnehmern scheinbar verkürzt und der sich jeweils am Ende der Kette befindende Netzwerkteilnehmer kann identifiziert werden. Dadurch, dass die Portdeaktivierung nur zeitweise erfolgt, kann die gesamte Kette nach der Erfassung aller Netzwerkteilnehmer wieder aktiviert werden und ist dann wieder für den regulären Netzwerkbetrieb bereit.

An der Durchführung des Verfahrens sind zunächst unmittelbar das Gateway und die Netzwerkteilnehmer beteiligt. Koordiniert werden kann das Verfahren von einer Steuerung des Gateways selbst, z.B. nach einer Aufforderung durch eine übergeordnete Steuerung oder durch einen Servicerechner, der mit dem Gateway über ein Netzwerk verbunden ist. Es versteht sich, dass die übergeordnete Steuerung bzw. der Servicerechner über ein Intranet oder das Internet mit dem Gateway verbunden sein kann. Das Verfahren kann auch durch eine vom Gateway externe Einheit koordiniert werden, z.B. die übergeordnete Steuerung oder den Servicerechner.

In einer vorteilhaften Ausgestaltung kann die Aufhebung der Deaktivierung des Ports eines Netzwerkteilnehmers durch den Netzwerkteilnehmer selbst nach einer vorbestimmten Zeit nach dem Deaktivieren des Ports erfolgen, z.B. indem der Netzwerkteilnehmer nach dem Deaktivieren eines Ports einen Zeitgeber startet, nach dessen Ablauf der Port wieder aktiviert wird.

In einer weiteren Ausgestaltung kann vorgesehen sein, dass die Deaktivierung eines Ports vom Netzwerkteilnehmer unmittelbar beendet wird, wenn er detektiert, dass an seinem anderen Port wieder eine Verbindung zu einem weiteren Netzwerkteilnehmer oder dem Ethernet-Gateway besteht. In dem Fall kann die gesamte Daisy Chain-Kette sukzessive und ohne Wartezeiten durch Ablauf einzelner Timer wieder aktiviert werden, indem der zuvor deaktivierte Port des Ethernet-Gateways wieder aktiviert wird.

In einer weiteren vorteilhaften Ausgestaltung des Verfahrens kann vorgesehen sein, dass die Aktionen in den Schritten (b) und/oder (d) selbstständig von dem betreffenden Netzwerkteilnehmer vorgenommen werden. Alternativ kann die die Statusmeldung im Schritt (b) und/oder das Deaktivieren des Ports im Schritt (d) auch nach Aufforderung durch das Gateway oder eine extern mit diesem in Verbindung stehende Einheit von dem Netzwerkteilnehmer vorgenommen werden.

Als Ergebnis des Verfahrens kann z.B. vom Ethernet-Gateway oder auch einer externen Einheit eine Tabelle erstellt werden, die ausgehend von dem zu Beginn deaktivierten Port eindeutig Identifikationsnummern, z.B. IP-Adressen und/oder MAC-Adressen, der Netzwerkteilnehmer und ihrer Positionen innerhalb der Daisy Chain-Kette wiedergibt. Mit einem vorgegebenen Verdrahtungsplan der Anordnung können dann die Identifikationsnummern der Netzwerkteilnehmer eindeutig den realen Netzwerkteilnehmern zugeordnet werden.

Eine erfindungsgemäße Anordnung mit landwirtschaftlichen Geräten, die jeweils über mindestens eine Netzwerkschnittstelle verfügen, die als Netzwerkteilnehmer mit einem Gateway in einer Ethernet-Daisy Chain-Topologie verschaltet sind, ist dazu eingerichtet, das zuvor genannte Verfahren auszuführen. Vorteilhaft weist die Anordnung eine Mehrzahl von gleichartigen Geräten auf und ist beispielsweise eine Anordnung einer Mehrzahl von Melkplätzen, insbesondere ein Melkkarussell. Es ergeben sich die im Zusammenhang mit dem Verfahren beschriebenen Vorteile.

Die Erfindung wird nachfolgend anhand von Ausführungsbeispielen mithilfe von Figuren näher erläutert. Die Figuren zeigen:
- Fig. 1: eine schematische Darstellung einer Anordnung von Netzwerkteilnehmern und einem Gateway in einer Ethernet-Daisy Chain-Topologie;
- Fig. 2a-2e: jeweils eine schematische Darstellung der Anordnung gemäß Fig. 1 in verschiedenen Betriebszuständen während der Durchführung eines erfindungsgemäßen Verfahrens;
- Fig. 3-4: jeweils eine schematische Darstellung einer Anordnung einer Mehrzahl von Melkplätzen mit Netzwerkteilnehmern in einem Melkstand; und
- Fig. 5: eine schematische Darstellung einer Anordnung einer Mehrzahl von Melkplätzen mit Netzwerkteilnehmern in mehreren Melkständen.

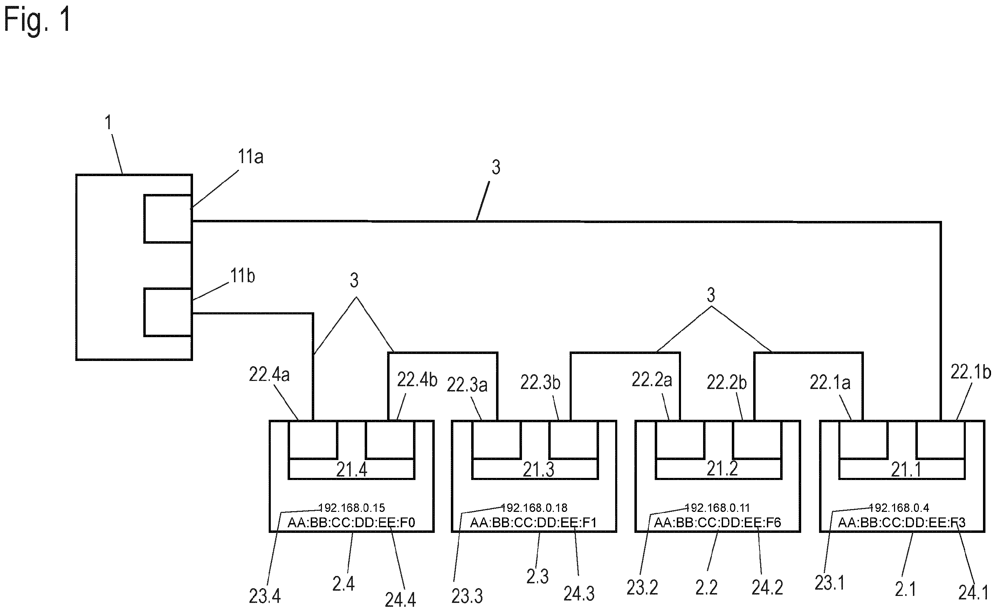

In Figur 1 ist beispielhaft und in Form eines Blockschaltbildes eine Anordnung von mehreren, hier beispielhaft vier Geräten 2.1-2.4 gezeigt, die in einer Daisy Chain-Topologie mit einem Gateway 1 gekoppelt sind.

Das Gateway 1 kann beispielsweise ein Ethernet-Switch oder ein sonstiges Netzwerkgerät sein, das in der Lage ist, die Daisy Chain-Kette der Geräte 2.1-2.4 mit einem übergeordneten Netzwerk zu verbinden. Das Gateway 1 kann selbst so eingerichtet sein, dass es das im Folgenden beschriebene Verfahren koordiniert. Dabei kann die Durchführung des Verfahrens von einer übergeordneten und mit dem Gateway 1 über das Netzwerk verbundenen Einheit, z.B. einer Steuereinrichtung des Melkstands initiiert werden. Auch ist es denkbar, dass das Verfahren von der übergeordneten Einheit selbst koordiniert wird.

Das Gateway 1 weist zwei Ports (Netzwerkanschlüsse) 11a, 11b auf, die mit den Enden der Daisy Chain-Kette gekoppelt sind. In der Daisy Chain-Kette selbst sind die Geräte 2.1-2.4 seriell hintereinander angeordnet. Jedes der Geräte 2.1-2.4 weist eine Netzwerkschnittstelle 21.1-21.4 auf, die wie das Gateway 1 zwei Ports bereitstellt, die in der Figur 1 mit den Bezugszeichen 22.1a-22.4a für einen ersten Port und 22.1b-22.4b für einen zweiten Port gekennzeichnet sind. Ports mit dem Index "a" sind jeweils mit dem Port mit dem Index "b" ihres Nachbarn über Netzwerkverbindungen 3 verbunden, so dass die in Figur 1 sichtbare Schleifenanordnung resultiert.

In der gezeigten Anordnung sind beispielsweise die Geräte 2.1-2.4 Melkplätze eines Melkstands, deren Steuereinrichtungen zu Überwachungs- und/oder Steuerzwecken die gezeigten Netzwerkanschlüsse aufweisen.

Nach dem Verbinden der gezeigten Komponenten wird jedem Netzwerkteilnehmer 21.1-21.4 eine IP-Adresse zugeteilt, die in der Figur 1 mit dem Bezugszeichen 23.1-23.4 gekennzeichnet ist. Weiter weist jeder Netzwerkteilnehmer 21.1-21.4 eine ihr fest zugewiesene MAC-Adresse 24.1-24.4 auf, die ebenfalls in der Figur 1 dargestellt ist. Nach der Verdrahtung der Komponenten ist somit im Gateway 1 bekannt, wie viele Netzwerkteilnehmer 21.1-21.4 vorhanden sind und welche IP- Adresse 23.1-23.4 bzw. MAC-Adresse 24.1-24.4 diese jeweils haben.

Nicht bekannt ist dem Gateway 1 oder der übergeordneten Einheit dagegen, in welcher Reihenfolge sich diese erkannten Netzwerkteilnehmer 21.1-21.4 innerhalb der Daisy Chain-Kette befinden.

Die beispielhaft angegebenen IP-Adressen 23.1-23.4 in der Figur 1 deuten beispielsweise an, dass diese Adressen nicht sukzessive und aufsteigend in der Reihenfolge der Anordnung der Netzwerkteilnehmer 21.1-21.4 innerhalb der Kette vergeben werden, sondern diese Zuordnung eher wahllos erfolgt.

Im Betrieb der in Figur 1 gezeigten Anordnung wird in der Regel bewusst an einer Stelle der gebildeten Schleife eine Unterbrechung durch Deaktivieren eines der Ports 11a, b bzw. 22.1a, b - 22.4a, b gebildet, so dass jeder Netzwerkteilnehmer 21.1-21.4 nur von einer Richtung her erreichbar ist, um Datenkollisionen vorzubeugen. Dazu kann beispielsweise die in Ethernet-Netzwerken bekannte Technologie RSTP (Rapid Spanning Tree Protocol) eingesetzt werden, die im Betrieb zur automatischen Erstellung einer baumartigen Struktur eines Netzwerkes führt. Wenn im Betrieb dann tatsächlich eine Netzwerkverbindung 3 ausfällt oder einer der genannten Ports 11a, b bzw. 22.1a, b - 22.4a, b funktionsuntüchtig ist, wird automatisch der zuvor deaktivierte Port wieder aktiviert, so dass die tatsächlichen Fehlerstelle die Unterbrechungsstelle in der Schleife darstellt. Eine Fehlerstelle kann auf diese Weise kompensiert werden.

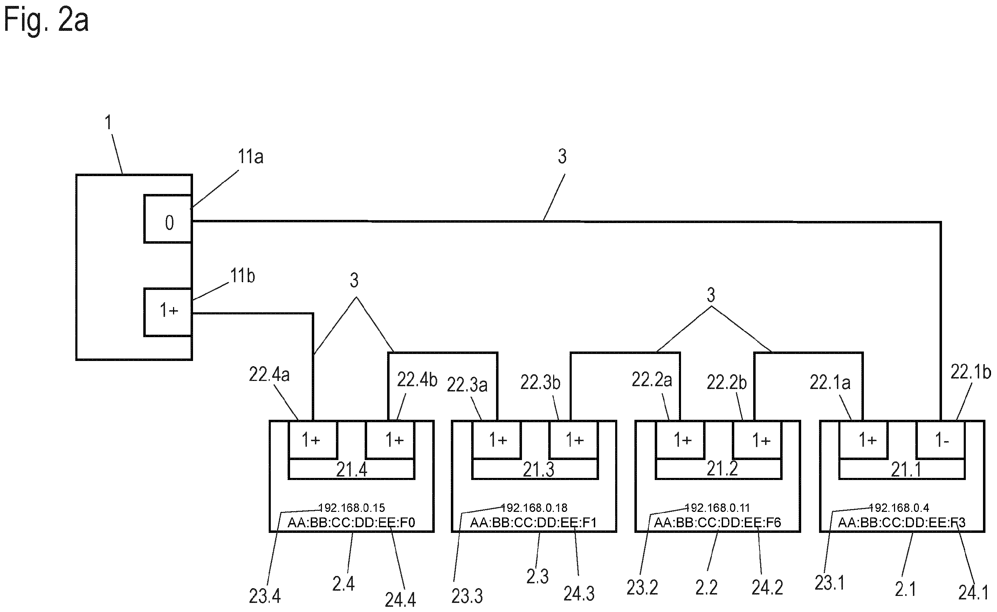

Ein erfindungsgemäßes Verfahren zum Erfassen einer Position eines Netzwerkteilnehmers innerhalb der Daisy Chain-Kette wird nachfolgend anhand der Fig. 2a-2e erläutert. Diese Figuren zeigen jeweils das bereits in Figur 1 dargestellte Blockschaltbild in verschiedenen Verfahrensschritten bei verschiedenen Zuständen der beteiligten Ports 11a, b bzw. 22.1a, b - 22.4a, b.

Der Zustand der Ports 11a, b bzw. 22.1a, b - 22.4a, b wird anhand der Symbole "0", "1+" und "1-" am jeweiligen Port verdeutlicht. Das Symbol "0" kennzeichnet einen deaktivierten Port. Das Symbol "1+" kennzeichnet einen aktivierten Port, der erkennt, dass er mit einem ebenfalls aktivierten und funktionstüchtigen Port eines benachbarten Netzwerkteilnehmers oder des Gateways verbunden ist. Das Symbol "1-" kennzeichnet einen aktivierten Port, der jedoch erkennt, dass keine Verbindung zu einem aktiven und funktionsfähigen Port eines benachbarten Netzwerkteilnehmers besteht.

In einem vorbereitenden Schritt des Verfahrens kann das Gateway 1 selbst oder die übergeordnete Einheit über das Gateway 1 einen Befehl in die Daisy Chain-Kette senden, der den Start des Verfahrens kennzeichnet und ggf. die Netzwerkteilnehmer 21.1-21.4 in einen Initialisierungsmodus versetzt. Als Reaktion quittieren die Netzwerkteilnehmer 21.1-21.4 den Empfang und senden dabei ihre aktuelle IP-Adresse 23.1-23.4 und ihre MAC-Adresse 24.1-24.4 zurück an das Gateway 1 bzw. die übergeordnete Einheit. Falls noch keine Gerätetabelle ("device table") angelegt wurde, erfolgt das nun, indem die Anzahl der Netzwerkteilnehmer 21.1-21.4 sowie die Zuordnung von IP-Adressen 23.1-23.4 zu MAC-Adressen 24.1-24.4 abspeichert werden.

In einem ersten Verfahrensschritt (a) deaktiviert das Gateway 1 einen der beiden Ports 11a, 11b, beispielhaft den ersten Port 11a. Dieses ist in der Figur 2a durch das Symbol "0" am Port 11a des Gateways 1 dargestellt. Als Folge erkennt der Netzwerkteilnehmer 21.1, dass sein Port 22.1b keine aktive Verbindung aufweist und setzt dessen Status auf "1-". Alle anderen Ports im System haben den Status "1+".

In einem nächsten Verfahrensschritt (b) sendet der Netzwerkteilnehmer 2.1, der die Statusänderung an seinem Port 22.1b erkannt hat, diese Statusänderung an das Gateway 1 (bzw. die übergeordnete Einheit), das bzw. die damit weiß, dass dieses Gerät 2.1 mit dem Netzwerkteilnehmer 21.1 und dem mit dem Statusreport übermittelten IP- und MAC-Adressen 23.1 und 24.1 das unmittelbar am Port 11a angeschlossene Gerät ist, also das Gerät mit der Positionsnummer 1 in der Daisy Chain-Kette. Die Netzwerkteilnehmer 21.1-21.4 können dazu eingerichtet sein, einen entsprechenden Statusreport selbstständig an das Gateway 1 bzw. die übergeordnete Einheit zu senden, wenn sie eine Zustandsänderung eines ihrer Ports 22.1a, b - 22.4a, b detektieren. Alternativ kann vorgesehen sein, dass das Gateway 1 bzw. die übergeordnete Einheit eine Anfrage in die Daisy Chain schickt und die Netzwerkteilnehmer 21.1-21.4 auffordert, den Status ihrer Ports 22.1a, b - 22.4a, b zu berichten.

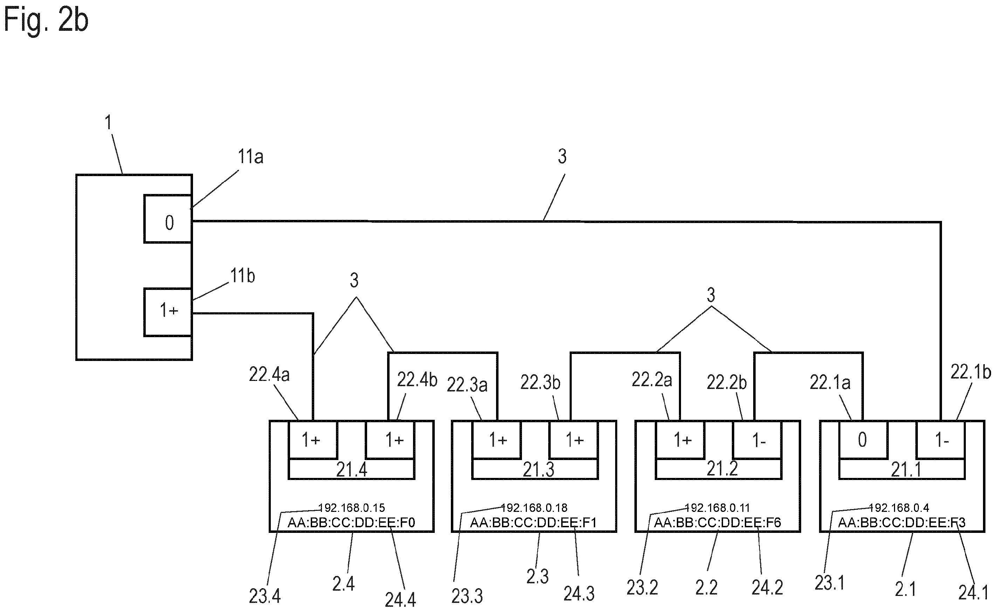

In einem nächsten Schritt (c) deaktiviert der Netzwerkteilnehmer 21.1 den zuvor noch aktiven Port 22.1a. Der sich ergebende Zustand ist in der Figur 2b dargestellt. Das Deaktivieren kann entweder nach unmittelbarer Aufforderung durch das Gateway 1 bzw. die übergeordnete Einheit in einer direkten Nachricht an den Netzwerkteilnehmer 21.1 erfolgen, da dessen IP-Adresse 23.1 nach dem Erhalt der Statusmeldung ja bekannt ist. Alternativ kann vom Gateway 1 bzw. der übergeordneten Einheit eine Aufforderung an alle Netzwerkteilnehmer 21.1-21.4 gesendet werden, dass diejenigen Netzwerkteilnehmer 21.1-21.4 die einen Port im Zustand "1-" aufweisen, den anderen ihrer Ports deaktivieren. Auch beim Versenden einer solchen Aufforderung würde der Netzwerkteilnehmer 21.1 den Port 22.1a deaktivieren. Als weitere Alternative ist auch denkbar, dass ein sich in dem Initialisierungsmodus befindender Netzwerkteilnehmer 21.1-21.4 automatisch seinen anderen Port deaktiviert, nachdem er den nicht verbundenen Port mit dem Status "-1" erkannt und die Statusmeldung darüber abgesendet hat.

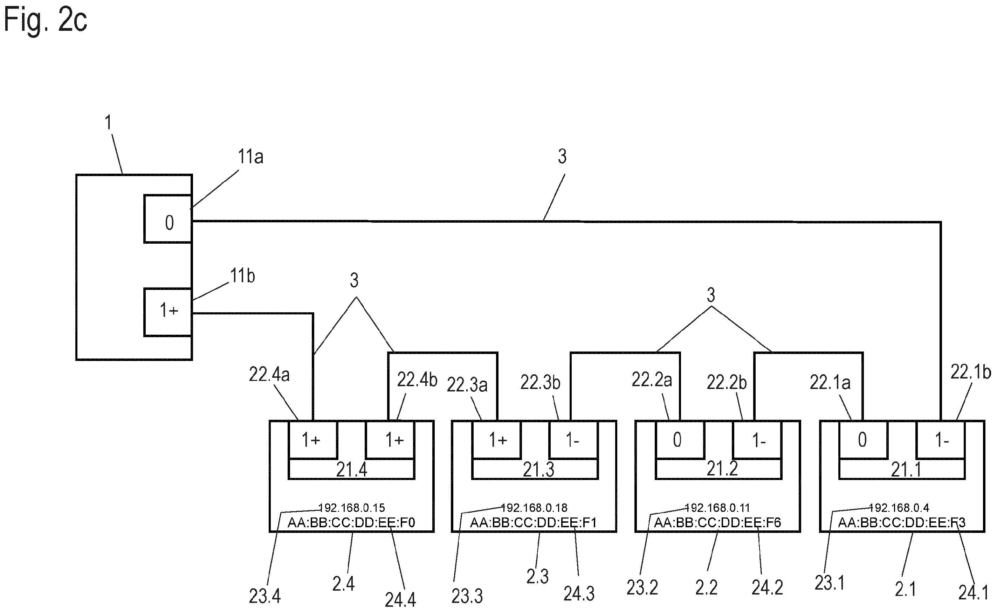

Nach diesem Schritt wiederholt sich der Schritt (b), dass nämlich der deaktivierte Port - jetzt der Port 22.1a des Netzwerkteilnehmers 21.1 - von dem Netzwerkteilnehmer 21.2 erkannt wird. In der Figur 2b ist dieses durch Einnahme des Zustandes "1-" am Port 22.2b zu erkennen. Daraufhin sendet jetzt der Netzwerkteilnehmer 21.2 die entsprechende Nachricht, einen Verbindungsabbruch am Port 22.2b erkannt zu haben, an das Gateway 1 bzw. die übergeordnete Einheit, dass daraufhin, die mitübermittelte IP-Adresse 23.2 und die mitübermittelte MAC-Adresse 24.2 dem Netzwerkteilnehmer 21.2 und dem zweiten Platz in der Daisy Chain-Kette zuordnen kann. Wiederum wird das Gerät 2.2 mit dem Netzwerkteilnehmer 21.2 aufgefordert, seinen anderen Port, den Port 22.2a zu deaktivieren bzw. deaktiviert diesen selbstständig, was zu dem in Figur 2c dargestellten Zustand führt.

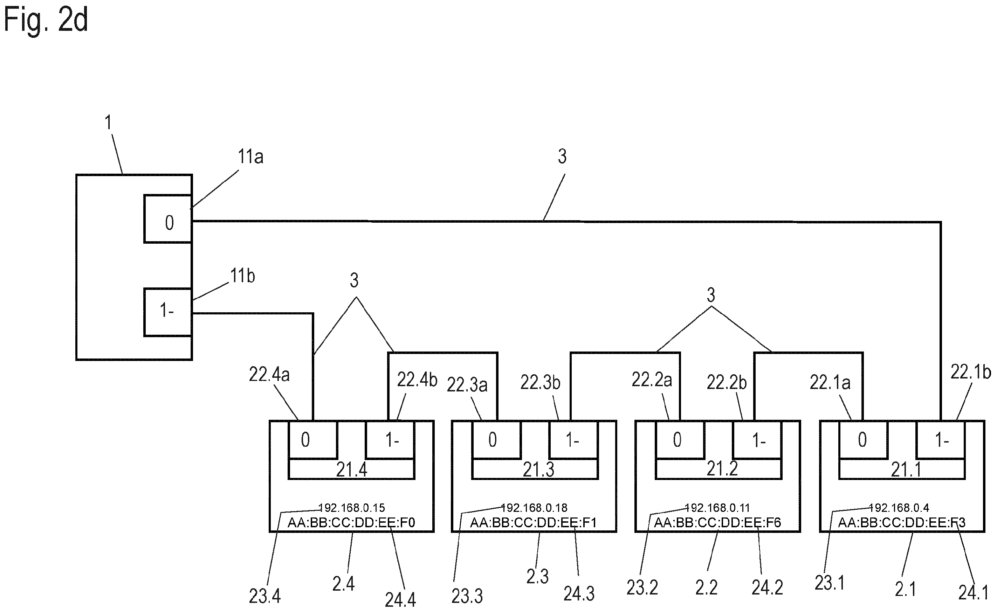

Die Schritte (b) und (c) werden dann so oft wiederholt, bis schließlich auch das letzte, unmittelbar am Gateway 1 am Port 11b angeschlossene Gerät 2.4 mit dem Netzwerkteilnehmer 21.4 seinen Port 22.4a deaktiviert hat, was das Gateway 1 am Port 11b detektiert. Dieses in Figur 2d dargestellt. Damit weiß das Gateway, dass alle Netzwerkteilnehmer 21.1-21.4 einschließlich ihrer Position innerhalb der Daisy Chain-Kette erkannt wurden. Das Gateway 1 bzw. die übergeordnete Einheit hat somit die Gerätetabelle um die Position innerhalb der Daisy Chain-Kette, auch "Kettenposition" genannt, vervollständigt.

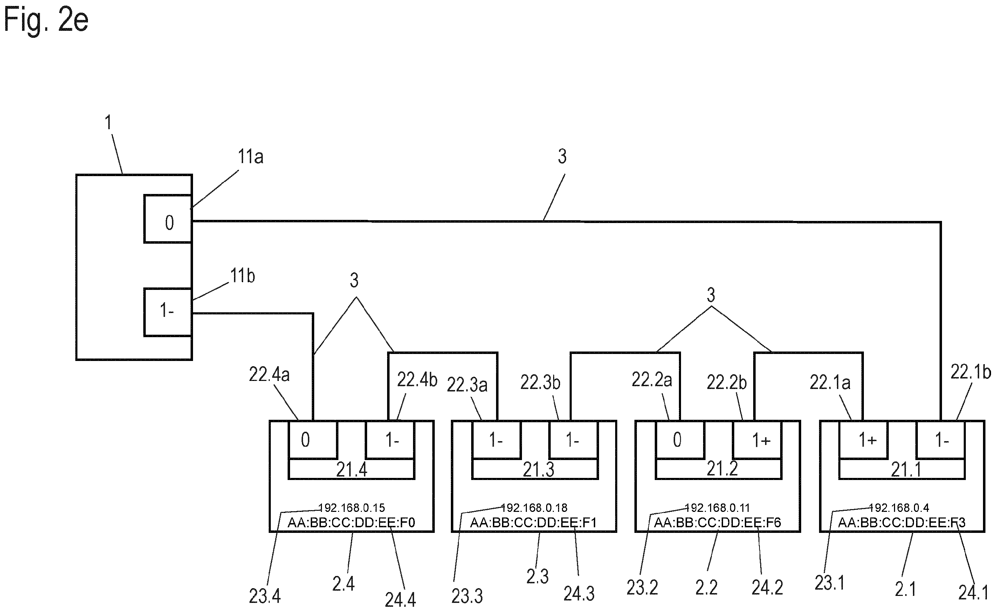

Das Erkennungsverfahren ist mit diesem Schritt beendet, woraufhin die Daisy Chain-Kette wieder in einen Betriebszustand des normalen Netzwerkbetriebes versetzt werden kann. Das kann beispielsweise dadurch geschehen, dass das Gerät 2.1 bzw. dessen Netzwerkteilnehmer 21.1 den Zustand des Ports 22.1a von "deaktiviert" wieder auf "aktiviert" setzt. Dazu kann beispielsweise ein Timer in jedem Netzwerkteilnehmer 21.1-21.4 vorgesehen sein, der mit Deaktivieren des jeweiligen Ports 22.1a-22.4a gestartet wird, wobei nach Ablauf des Timers die Deaktivierung des Ports aufgehoben wird. Als Folge erkennt auch der damit verbundene Port, in diesem Verfahrenszustand der Port 22.2b des Netzwerkteilnehmers 21.2, dass er wieder mit einem aktiven Port verbunden ist und setzt seinen Zustand ebenfalls auf "1+". Dieses ist in Figur 2e wiedergegeben.

Nach Ablauf der Timer auch der Geräte 2.2-2.4 ist damit die gesamte Daisy Chain-Kette wieder einsatzbereit. Zur Beschleunigung des Verfahrens kann vorgesehen sein, dass beim Erkennen einer aktiven Verbindung an einem der Ports automatisch der andere Port ebenfalls wieder aktiviert wird. In dem Fall würde das Netzwerkgerät 2.2 unmittelbar ausgehend von dem in Figur 2e dargestellten Zustand (d.h. nach dem Ablauf des Timers des Geräts 2.1 und der Wiederaktivierung des Ports 22.1a) auch seinen Port 22.2a aktivieren. In Art einer Kettenreaktion erstreckt sich das Aktivieren danach ebenfalls nahezu unmittelbar auf die Netzwerkgeräte 2.3 und 2.4.

In einer alternativen Ausgestaltung kann diese Kettenreaktion auch unmittelbar vom Gateway 1 ausgelöst werden, indem der Port 11a aktiviert wird, was das Gerät 2.1 und in der Folge die Geräte 2.2-2.4 ebenfalls zum Aktivieren ihrer deaktivierten Ports bringen würde, auch wenn in den Netzwerkgeräten kein ablaufender Timer vorgesehen ist.

Die so erstellte Gerätetabelle, die z.B. das Gateway 1 oder die übergeordnete Einheit aufgebaut hat, kann nun von beliebigen Anwendungen verwendet werden, die von einer Platzzuordnung profitieren bzw. die von einer Platzzuordnung abhängig sind. Sie kann z. B. auch dazu verwendet werden, einen DHCP (Dynamic Host Configuration Protocol)-Server anzuweisen, den einzelnen Geräten 2.1-2.4 bzw. deren Netzwerkteilnehmern 21.1-21.4 gewünschte vorgegebene und ggf. die Platznummer widerspiegelnde IP-Adressen zuzuweisen. Weiter können automatisiert im Netzwerk den IP-Adressen durch einen DNS (Domain Name Service)-Dienst unter Verwendung dieser Gerätetabelle Namen zugewiesen werden, die ebenfalls von der Platznummer abhängen oder diese widerspiegeln. Auch kann bei einem Vorliegen von Verbindungsproblemen zwischen den Geräten 2.1-2.4 die erstellte Tabelle genutzt werden, um konkret anzugeben, zwischen welchen Geräten 2.1-2.4 das Problem besteht, was eine Fehlersuche für Servicetechniker vereinfacht.

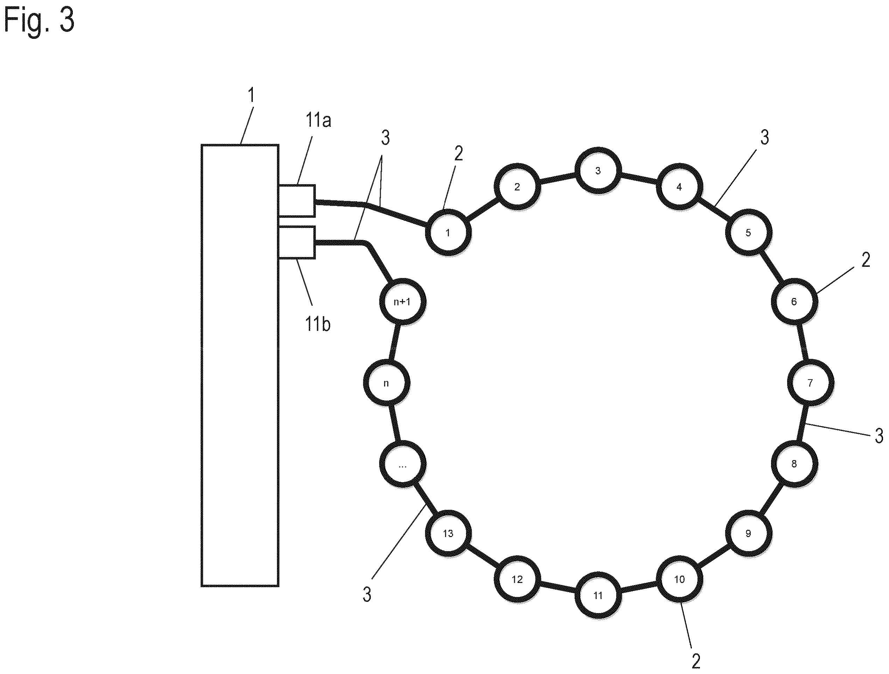

In Figur 3 ist ein Blockschaltbild bzw. Verdrahtungsplan eines Melkkarussells als Beispiel einer Melkstandanordnung gezeigt, in der das beschriebene Verfahren eingesetzt werden kann.

Eine Mehrzahl von Geräten 2 ist in Form einer Daisy Chain-Kette mit Verbindungen 3 untereinander und mit zwei Ports 11a, 11b eines Gateways 1 verbunden. Die Geräte 2 weisen wie beim Beispiel der Figur 1 jeweils eine Netzwerkschnittstelle (entspricht den Netzwerkteilnehmern 21.1 - 21.4 der Figur 1) mit zwei Ports auf, die aus Gründen der Übersichtlichkeit hier aber nicht näher dargestellt sind. Insgesamt umfasst das gezeigte Melkkarussell 16 Geräte 2. Die Geräte 2 entsprechen den Melkplätzen der Melkstandanordnung und werden daher im Folgenden auch als Melkplätze 2 bezeichnet.

Bei Durchführung des zuvor beschriebenen Verfahrens kann ausgehend von dem Port 11a eine Erfassung der Melkplätze 2 einschließlich einer Zuordnung der IP- bzw. MAC-Adressen zu den einzelnen Plätzen entlang des Melkkarussells erfolgen.

Mit der Annahme, dass der am Port 11a angeschlossene Melkstand 2 die "Platznummer 1" des Melkkarussells ist, stellt die erfasste Position jedes der Melkplätze 2 in der Daisy Chain-Kette unmittelbar seine Platznummer im Melkkarussell dar. Bei Zuweisung der "Platznummer 1" zu einem anderen der Melkplätze 2 ergibt sich gegenüber der ermittelten Positionsnummer in der Daisy Chain-Kette ein entsprechender Offset. Auf einfache Weise kann so das erfindungsgemäße Verfahren eine automatische Erfassung der IP- und/oder MAC-Adressen zu den einzelnen Melkplätzen 2 und ihren Platznummern erfolgen.

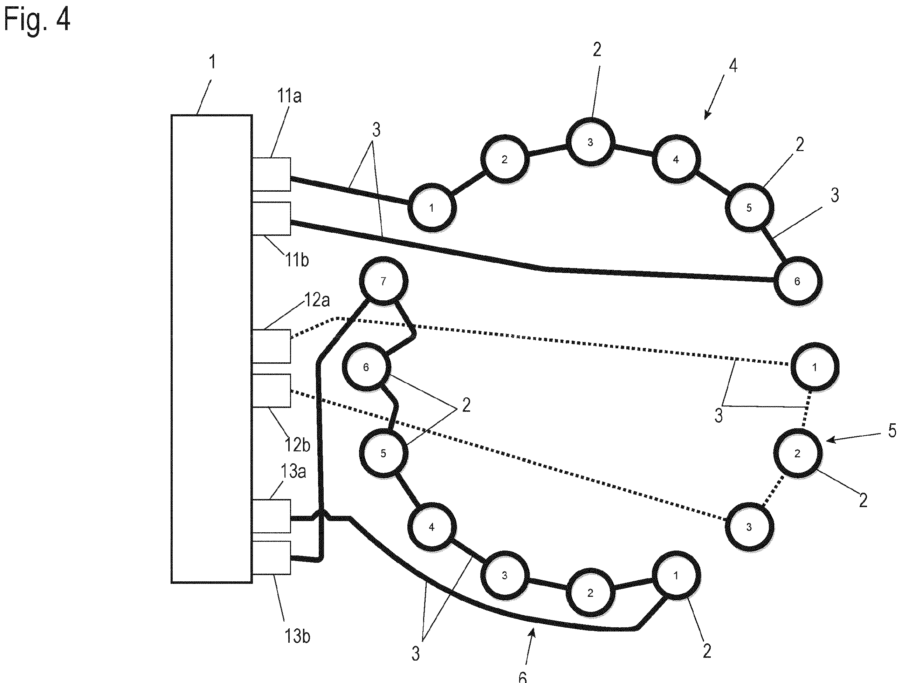

Figur 4 zeigt ein vergleichbares Melkkarussell mit einer Mehrzahl von Melkplätzen 2, die im Unterscheid zum Ausführungsbeispiel der Figur 3 nicht in einer Daisy Chain-Kette miteinander verbunden sind, sondern in drei separaten Daisy Chain-Ketten. Die Melkplätze sind als Gerätegruppen 4, 5 und 6 in der Figur 4 gekennzeichnet, wobei die Melkplätze jeder der Gerätegruppen 4-6 durch eine Daisy Chain-Kette gekoppelt sind.

Die Gerätegruppe 4 weist eine Daisy Chain-Kette einer Länge von sechs Melkplätzen 2 auf, die an zwei Ports 11a, 11b an das Gateway 1 angekoppelt sind. Die Teilnehmergruppe 5 umfasst drei Melkplätze 2, die in Form einer Daisy Chain-Kette mit zwei Ports 12a, 12b gekoppelt sind. Schließlich umfasst die dritte Gerätegruppe 6 sieben Melkplätze 2, die als Daisy Chain-Kette mit Ports 13a, 13b des Gateway 1 verbunden sind.

Das zuvor beschriebene Verfahren zur Ermittlung einer Zuordnung von IP- und/oder MAC-Adresse zu einer Position eines Geräts 2 in einer Daisy Chain-Kette kann nun separat für jede der drei Gerätegruppen 4-6, also jede der Daisy Chain-Ketten durchgeführt werden. Aus dem Verdrahtungsplan geht hervor, dass bei der dargestellten Verdrahtung sich das erste erkannte Gerät 2 der zweiten Daisy Chain-Kette (Gerätegruppe 5) an das letzte Gerät der ersten Daisy Chain-Kette (Gerätegruppe 4) anschließt. Weiter schließt sich das erste Gerät der dritten Daisy Chain-Kette (Gerätegruppe 6) an das letzte Gerät der zweiten Daisy Chain-Kette (Gerätegruppe 5) an. Mit dieser Information aus dem Verdrahtungsplan können die drei separat erstellten Gerätetabellen für die einzelnen Daisy Chain-Ketten kombiniert werden und es kann eine Zuordnung von IP- bzw. MAC-Adressen zu Platznummern auf dem Melkkarussell erfolgen. Wiederum ist auch hier lediglich eine Zuordnung vorzugeben, die den Melkplatz mit der Platznummer 1 betrifft.

Es wird angemerkt, dass die drei Gerätegruppen 4-6 sich nicht zwingend so aneinander anschließen müssen wie es im dargestellten Beispiel der Figur 4 der Fall ist. Die Gruppen können auch mit unterschiedlicher Ausrichtung und/oder verschränkt ineinander verkabelt werden, die Information wie die Gruppen zusammenhängen, um einer umlaufend aufsteigenden Platznummer zugeordnet zu werden, wird jedoch dann bei der Zuordnung zu einem tatsächlichen physikalischen Platz auf dem Melkkarussell benötigt.

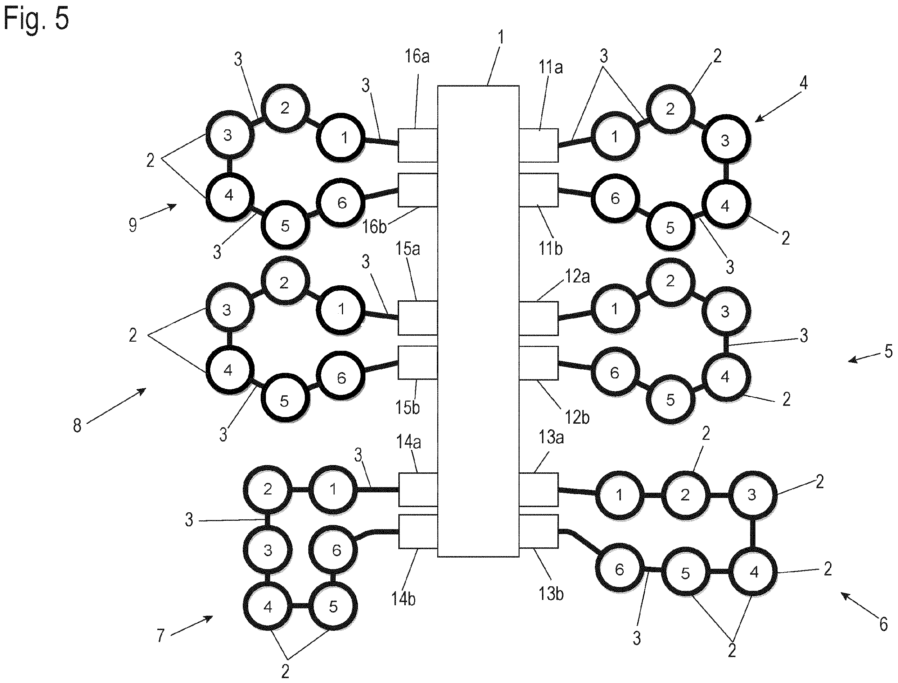

Figur 5 schließlich zeigt eine Anordnung von insgesamt sechs Gerätegruppen 4-9 von Melkplätzen 2, die in diesem Fall nicht eines gemeinsamen Melkstands, sondern (wie bei dem Melkkarussell der Figuren 3 und 4) zuzuordnen sind, sondern sechs verschiedenen Melkständen. Alle diese Melkstände bzw. Gerätegruppen 4-9 werden von einem gemeinsamen Gateway 1 aus bedient. Das Gateway 1 weist dazu zwölf Ports 11a-16a und 11b-16b auf, die jeweils paarweise mit einer der Daisy Chain-Ketten verbunden sind. Die Gerätegruppen 4-9 können beispielsweise Cluster von Melkplätzen 2 sein, die innerhalb der Gruppen auch räumlich nah beieinander angeordnet sind, so dass die Gruppierung in gewisser Weise die räumliche Positionierung auf einem landwirtschaftlichen Hof widerspiegelt. Auch bei dem Beispiel der Figur 5 kann unabhängig voneinander für jede der Gruppen 4-9 das erfindungsgemäße Verfahren durchgeführt werden, um die Position der einzelnen Melkplätze 2 innerhalb einer der Gerätegruppen 4-9 und innerhalb einer Daisy Chain-Kette zu erfassen.

### Bezugszeichen

- 1: Gateway
- 11a: erster Port
- 11b: zweiter Port
- 12a-16a: weiterer erster Port
- 12b-16b: weiterer zweiter Port

- 2, 2.1-2.4: Gerät (Melkplatz)
- 21.1-21.4: Netzwerkteilnehmer
- 22.1a-22.4a: erster Port
- 22.1b-22.4b: zweiter Port
- 23.1-23.4: IP-Adresse
- 24.1-24.4: MAC-Adresse

- 3: Netzwerkverbindung

- 4-9: Gerätegruppe (Melkstand)

## Patentansprüche

1. Verfahren zum Ermitteln einer Kettenposition eines Netzwerkteilnehmers (21.1-21.4) in einem Ethernet-Netzwerk, bei der die Netzwerkteilnehmer (21.1-21.4) in einer Daisy Chain-Kette miteinander verbunden sind und die Daisy Chain-Kette an ihren beiden Enden mit jeweils einem Port (11a-16a, 11b-16b) eines Ethernet-Gateways (1) gekoppelt ist, aufweisend die folgenden Schritte:
(a) Deaktivieren eines der beiden Ports (11a-16a, 11b-16b) des Ethernet-Gateways (1);
(b) Erfassen einer Statusmeldung eines der Netzwerkteilnehmer (21.1-21.4), wobei die Statusmeldung einen Port (22.1a-22.4a, 22.1b-22.4b) des betreffenden Netzwerkteilnehmers (21.1-21.4) betrifft, der als Folge des Schritts (a) keine aktive Verbindung aufweist;
(c) Extrahieren mindestens einer Identifikationsnummer aus der Statusmeldung des betreffenden Netzwerkteilnehmers (21.1-21.4) und zuordnen einer ersten Kettenposition zu der Identifikationsnummer;
(d) Deaktivieren des anderen Ports (22.1a-22.4a, 22.1b-22.4b) des betreffenden Netzwerkteilnehmers (21.1-21.4); und
(e) Wiederholen der Schritte (b) bis (d), bis alle Netzwerkteilnehmer (21.1-21.4) mit ihrer Identifikationsnummer erfasst sind, wobei in den Wiederholungen des Schritts (c) nachfolgende Kettenpositionen zugeordnet werden und wobei in dem Schritt (b) die Statusmeldung einen Port (22.1a-22.4a, 22.1b-22.4b) des betreffenden Netzwerkteilnehmers (21.1-21.4) betrifft, der als Folge des Schritts (d) keine aktive Verbindung aufweist.

2. Verfahren nach Anspruch 1, bei dem die ermittelten Kettenpositionen zusammen mit den Identifikationsnummern in einer Gerätetabelle erfasst werden.

3. Verfahren nach Anspruch 1 oder 2, bei dem die Identifikationsnummern IP-Adressen (23.1-23.4) und/oder MAC-Adressen (24.1-24.4) sind.

4. Verfahren nach einem der Ansprüche 1 bis 3, bei dem die Statusmeldung im Schritt (b) nach dem Erkennen des nicht verbundenen Ports selbstständig von dem betreffenden Netzwerkteilnehmer (21.1-21.4) ausgegeben wird.

5. Verfahren nach einem der Ansprüche 1 bis 3, bei dem die Statusmeldung im Schritt (b) nach Aufforderung von dem betreffenden Netzwerkteilnehmer (21.1-21.4) ausgegeben wird.

6. Verfahren nach einem der Ansprüche 1 bis 5, bei dem das Deaktivieren des anderen Ports (22.1a-22.4a, 22.1b-22.4b) im Schritt (d) nach dem Erkennen des nicht verbundenen Ports selbstständig von dem betreffenden Netzwerkteilnehmer (21.1-21.4) vorgenommen wird.

7. Verfahren nach einem der Ansprüche 1 bis 5, bei dem das Deaktivieren des anderen Ports (22.1a-22.4a, 22.1b-22.4b) im Schritt (d) nach dem Erkennen des nicht verbundenen Ports nach Aufforderung von dem betreffenden Netzwerkteilnehmer (21.1-21.4) vorgenommen wird.

8. Verfahren nach einem der Ansprüche 1 bis 7, bei dem nach dem Schritt (e) die Netzwerkteilnehmer (21.1-21.4) und/oder das Gateway (1) die deaktivierten Ports (11a-16a, 11b-16b, 22.1a-22.4a, 22.1b-22.4b) wieder aktivieren.

9. Verfahren nach einem der Ansprüche 1 bis 8, bei dem die Netzwerkteilnehmer (21.1-21.4) die Ports (22.1a-22.4a, 22.1b-22.4b) selbstständig nach einer vorbestimmten Zeit nach dem Deaktivieren wieder aktivieren.

10. Verfahren nach einem der Ansprüche 1 bis 8, bei dem die Netzwerkteilnehmer (21.1-21.4) die Ports (22.1a-22.4a, 22.1b-22.4b) selbstständig wieder aktivieren, wenn sie an dem anderen der Ports (22.1a-22.4a, 22.1b-22.4b) wieder eine Verbindung detektieren.

11. Anordnung von landwirtschaftlichen Geräten (2), die jeweils über mindestens eine Netzwerkschnittstelle verfügen, die als Netzwerkteilnehmer (21.1-21.4) mit einem Gateway (1) in einer Ethernet-Daisy Chain-Topologie verschaltet sind, **dadurch gekennzeichnet, dass** die Anordnung zur Durchführung eines Verfahrens gemäß einem der Ansprüche 1 bis 10 eingerichtet ist.

12. Anordnung nach Anspruch 11, bei der die Geräte (2) Melkplätze sind, insbesondere eines Melkkarussells.

## Claims

1. Method for determining a chain position of a network subscriber (21.1-21.4) in an Ethernet network, in which the network subscribers (21.1-21.4) are connected to one another in a daisy chain and the daisy chain is coupled at its two ends to a respective port (11a-16a, 11b-16b) of an Ethernet gateway (1), comprising the following steps:
(a) deactivating one of the two ports (11a-16a, 11b-16b) of the Ethernet gateway (1);
(b) acquiring a status message from one of the network subscribers (21.1-21.4), wherein the status message concerns a port (22.1a-22.4a, 22.1b-22.4b) of the respective network subscriber (21.1-21.4) which, as a result of step (a), has no active connection;
(c) extracting at least one identification number from the status message of the respective network subscriber (21.1-21.4) and assigning a first chain position to the identification number;
(d) deactivating the other port (22.1a-22.4a, 22.1b-22.4b) of the respective network subscriber (21.1-21.4); and
(e) repeating steps (b) to (d) until all network subscribers (21.1-21.4) are acquired with their identification number, wherein subsequent chain positions are assigned in the repetitions of step (c) and wherein, in step (b), the status message concerns a port (22.1a-22.4a, 22.1b-22.4b) of the respective network subscriber (21.1-21.4) which, as a result of step (d), has no active connection.

2. Method according to claim 1, in which the determined chain positions are acquired in a device table together with the identification numbers.

3. Method according to claim 1 or 2, in which the identification numbers are IP addresses (23.1-23.4) and/or MAC addresses (24.1-24.4).

4. Method according to one of claims 1 to 3, in which the status message in step (b) is issued independently by the relevant network subscriber (21.1-21.4) after detection of the non-connected port.

5. Method according to one of claims 1 to 3, in which the status message in step (b) is issued upon request by the respective network subscriber (21.1-21.4).

6. Method according to one of claims 1 to 5, in which the deactivation of the other port (22.1a-22.4a, 22.1b-22.4b) in step (d) is carried out independently by the respective network subscriber (21.1-21.4) after detecting the non-connected port.

7. Method according to one of claims 1 to 5, in which the deactivation of the other port (22.1a-22.4a, 22.1b-22.4b) in step (d) is carried out after detecting the non-connected port upon request by the respective network subscriber (21.1-21.4).

8. Method according to one of claims 1 to 7, in which after step (e) the network subscribers (21.1-21.4) and/or the gateway (1) reactivate the deactivated ports (11a-16a, 11b-16b, 22.1a-22.4a, 22.1b-22.4b) again.

9. Method according to one of claims 1 to 8, in which the network subscribers (21.1-21.4) independently reactivate the ports (22.1a-22.4a, 22.1b-22.4b) after a predetermined time after deactivation.

10. Method according to one of claims 1 to 8, in which the network subscribers (21.1-21.4) independently reactivate the ports (22.1a-22.4a, 22.1b-22.4b) when they detect a connection again on the other of the ports (22.1a-22.4a, 22.1b-22.4b).

11. Arrangement of agricultural devices (2), each having at least one network interface, which are connected as network subscribers (21.1-21.4) to a gateway (1) in an Ethernet daisy chain topology, **characterized in that** the arrangement is adapted for carrying out a method according to one of claims 1 to 10.

12. Arrangement according to claim 11, in which the devices (2) are milking places, in particular of a milking carousel.

## Revendications

1. Procédé pour déterminer une position dans la chaîne d'un périphérique de réseau (21.1-21.4) dans un réseau Ethernet, dans lequel les périphériques de réseau (21.1-21.4) sont concaténés en marguerite et le réseau en marguerite est couplé à ses deux extrémités à un port respectif (11a-16a, 11b-16b) d'une passerelle Ethernet (1), comprenant les étapes suivantes :
(a) désactivation d'un des deux ports (11a-16a, 11b-16b) de la passerelle Ethernet (1) ;
(b) acquisition d'un message d'état d'un des périphériques de réseau (21.1-21.4), lequel message d'état concerne un port (22.1a-22.4a, 22.1b-22.4b) du périphérique de réseau (21.1-21.4) en question qui n'a pas de connexion active à la suite de l'étape (a) ;
(c) extraction d'au moins un numéro d'identification du message d'état du périphérique de réseau (21.1-21.4) en question et affectation au numéro d'identification d'une première position dans la chaîne ;
(d) désactivation de l'autre port (22.1a-22.4a, 22.1b-22.4b) du périphérique de réseau (21.1-21.4) en question et
(e) répétition des étapes (b) à (d) jusqu'à ce que tous les périphériques de réseau (21.1-21.4) aient été acquis avec leur numéro d'identification, des positions dans la chaîne consécutives étant assignées lors des répétitions de l'étape (c) et le message d'état de l'étape (b) concernant un port (22.1a-22.4a, 22.1b-22.4b) du périphérique de réseau (21.1-21.4) en question qui n'a pas de connexion active à la suite de l'étape (d).

2. Procédé selon la revendication 1, dans lequel les positions dans la chaîne déterminées sont acquises avec les numéros d'identification dans un tableau d'appareils.

3. Procédé selon la revendication 1 ou 2, dans lequel les numéros d'identification sont des adresses IP (23.1-23.4) et/ou des adresses MAC (24.1-24.4).

4. Procédé selon l'une des revendications 1 à 3, dans lequel le message d'état est émis automatiquement dans l'étape (b), après la reconnaissance du port non connecté, par l'périphérique de réseau (21.1-21.4) en question.

5. Procédé selon l'une des revendications 1 à 3, dans lequel le lequel le message d'état est émis dans l'étape (b) après un ordre du périphérique de réseau (21.1-21.4) en question.

6. Procédé selon l'une des revendications 1 à 5, dans lequel la désactivation de l'autre port (22.1a-22.4a, 22.1b-22.4b) est effectuée automatiquement dans l'étape (d), après la reconnaissance du port non connecté, par l'périphérique de réseau (21.1-21.4) en question.

7. Procédé selon l'une des revendications 1 à 5, dans lequel la désactivation de l'autre port (22.1a-22.4a, 22.1b-22.4b) est effectuée dans l'étape (d) après la reconnaissance du port non connecté, après un ordre du périphérique de réseau (21.1-21.4) en question.

8. Procédé selon l'une des revendications 1 à 7, dans lequel, après l'étape (e), les périphériques de réseau (21.1-21.4) et/ou la passerelle (1) réactivent les ports (11a-16a, 11b-16b, 22.1a-22.4a, 22.1b-22.4b) désactivés.

9. Procédé selon l'une des revendications 1 à 8, dans lequel les périphériques de réseau (21.1-21.4) réactivent automatiquement les ports (22.1a-22.4a, 22.1b-22.4b) après un laps de temps prédéterminé suivant la désactivation.

10. Procédé selon l'une des revendications 1 à 8, dans lequel les périphériques de réseau (21.1-21.4) réactivent automatiquement les ports (22.1a-22.4a, 22.1b-22.4b) quand ils détectent à nouveau une connexion sur l'autre port (22.1a-22.4a, 22.1b-22.4b).

11. Disposition d'appareils agricoles (2) disposant chacun d'au moins une interface de réseau, qui sont connectés comme périphériques de réseau (21.1-21.4) avec une passerelle (1) à une topologie Ethernet en marguerite, **caractérisée en ce qu'**elle est configurée en vue de l'exécution d'un procédé selon l'une des revendications 1 à 10.

12. Disposition selon l'une des revendications 11, dans laquelle les appareils (2) sont des postes de traite, en particulier un manège de traite.
